(19) Europäisches Patentamt
European Patent Office
Office européen des brevets

(11) Publication number: 0 164 970
B1

(12) **EUROPEAN PATENT SPECIFICATION**

(45) Date of publication of patent specification: **19.04.89**

(51) Int. Cl.$^4$: **C 07 F 9/50,** A 61 K 31/28, A 61 K 31/30, A 61 K 31/66

(21) Application number: **85303851.1**

(22) Date of filing: **31.05.85**

# (54) Tumor cell growth-inhibiting pharmaceutical compositions containing phosphino-hydrocarbon-gold, silver or copper complexes.

(30) Priority: **04.06.84 US 616621**
**02.04.85 US 718904**

(43) Date of publication of application:
**18.12.85 Bulletin 85/51**

(45) Publication of the grant of the patent:
**19.04.89 Bulletin 89/16**

(84) Designated Contracting States:
**AT BE CH DE FR GB IT LI LU NL SE**

(58) References cited:
**DE-A-2 831 525**
**US-A-3 661 959**

**JOURNAL OF THE CHEMICAL SOCIETY DALTON TRANSACTIONS, no. 5, 1984, pages 969-974; S.J. BERNERS-PRICE et al.: "Stable gold(1) complexes with chelate rings: solution studies of bis(phosphino)ethane complexes and X-ray crystal structure of bis1,2-bis(diphenylphosphino)ethanergold(1) hexafluoroantimonate-acetone (1/1)"**

**The file contains technical information submitted after the application was filed and not included in this specification**

(73) Proprietor: **SMITHKLINE BECKMAN CORPORATION**
**P.O. Box 7929 1 Franklin Plaza**
**Philadelphia Pennsylvania 19101 (US)**

(72) Inventor: **Berners-Price, Susan Jane**
**91 Norfolk Avenue**
**South Croydon Surrey CR2 8BW (GB)**
Inventor: **Mirabelli, Christopher Kevin**
**120 Charleston Greene**
**Malvern Pennsylvania 19355 (US)**
Inventor: **Johnson, Randall Keith**
**71 Llanfair Circle**
**Ardmore Pennsylvania 19002 (US)**
Inventor: **Sadler, Peter John**
**48 Park Crescent**
**Harrow Weald Middlesex HA3 6ES (GB)**

(74) Representative: **Denerley, Paul Millington, Dr. et al**
**Smith Kline & French Laboratories Ltd**
**Patent Department Mundells**
**Welwyn Garden City Hertfordshire AL7 1EY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 164 970 B1**

(56) References cited:

CHEMICAL ABSTRACTS, vol. 99, no. 8, 22nd August 1983, page 599, column 2, abstract no. 63190b, Columbus, Ohio, US; C.B. KNOBLER et al.: "Synthesis and characterization of dinuclear trihydride complexes of platinum with chelating ligands. Crystal and molecular structure of Pt2H3(Ph2P(CH2)2PPh2)2rBPh4r", & INORG. CHEM. 1983, 22(16), 2324-2331

INORGANICA CHIMICA ACTA, vol. 1:2, September 1967, pages 315-318; F. CARIATI et al.: "Clusters of gold compounds with 1,2Bis(diphenylphosphino)ethane"

JOURNAL OF INORGANIC NUCLEAR CHEMISTRY, vol. 34, 1972, pages 933-946, GB; N. MARSICH et al.: "Complexes of Cu(I) halides with bis(diphenylphosphino)methane and 1,2-bis(diphenylphosphino)ethane"

CANADIAN JOURNAL OF CHEMISTRY, vol. 49, 1971, pages 761-766; W.A. ANDERSON et al.: "Nitrato and acetylacetonato complexes of copper(I)"

## Description

BACKGROUND OF THE INVENTION

This invention relates to novel bis[bis(diphenylphosphino)hydrocarbon]-, bis[bis(diethylphosphino)-hydrocarbon]-, bis[(diphenylphosphino-diethylphosphino)hydrocarbon]gold(I), silver(I) or copper(I) complexes or tris[bis(diphenylphosphino)ethane]dicopper(I) derivatives for use as tumor cell growth-inhibiting activity, novel pharmaceutical compositions containing tumor cell growth-inhibiting amounts of such complexes, and their use in therapy, in particular their use in a method of treating tumor cells sensitive to such complexes which comprises administering tumor cell growth-inhibiting amounts of such complexes to a host animal afflicted by such tumor cells. As disclosed more fully below, the active ingredients are cytotoxic to mammalian cells *in vitro*, for example B16 melanoma cells, and tumoricidal against animal tumor cells *in vivo*, for example P388 leukemia and M5076 reticulum cell sarcoma in mice.

Dines, *Inorg. Chem., 11*(12), 2949—52 (1972), discloses bis[1,2-bis(diphenylphosphino)ethane]-copper(I) trifluoroacetate. Cariati et al., *Inorg. Chim. Acta, 1*(2), 315—18 (1967) disclose bis[1,2-bis(diphenyl-phosphino)ethane] gold(I) chloride. Bates et al., *Inorg. Chim. Acta, 81*(2), 151—156 (1984) disclose the crystal and molecular structure of bis[1,2-bis(diphenylphosphino)ethane]gold(I) chloride. Sadler et al., *J. Chem. Soc., Dalton Trans.*, 969—974 (1984), discloses the X-ray crystal structure of bis[1,2-bis(diphenylphosphino)ethane] gold (I) hexafluoroantimonate-acetone solvate. Cariati et al., *Chim. Ind. (Milan), 52*(10), 995—998 (1970), disclose bis[1,2-bis(diphenylphosphino)ethane]gold(I) thiocyanate. Kuhn et al., *Chemiker-Zeitung, 105*(3), 87—88 (1981), discloses bis[1,2-bis(diphenylphosphino)ethane]silver(I) methanesulfonate. Carty et al., *Can. J. Chem., 49*, 761—6 (1971), disclose bis[1,2-bis(diphenylphosphino)ethane] copper(I) nitrate. Leoni et al., *J.C.S. Chem. Comm., 5*, 240—241 (1983), disclose bis[1,2-bis(diphenylphosphino)-ethane]copper(I) di[copper(mesityl)]. Marsich, et al., *J. Inorg. Nucl. Chem., 34*(3), 933—46 (1972), disclose dichlorotris-[1,2-bis(diphenylphosphino)ethane] dicopper(I)-bis-chloroform and its bromo and iodo analogs. Albano, *J. Chem., Soc., Dalton Trans,* 1938—43 (1972), discloses dichlorotris-[1,2-bis(diphenyl-phosphino)ethane] dicopper(I) bis-acetone. Edwards et al., *J. Chem. Soc., Dalton Trans,* 637—43 (1975), disclose bis(acetato)tris[1,2-bis(diphenylphosphino)ethane] dicopper (I). Carty et al, *Can. J. Chem., 49*(5), 761—6 (1971), disclose bis(nitrato)tris[1,2-bis(diphenylphosphino)ethane] dicopper(I). Struck et al., *J. Med. Chem., 9*, 414—416 (1966), disclose cytotoxic activity for 1,2-bis(diphenylphosphino)ethane which is used as a starting material to prepare some of the active ingredients of the pharmaceutical compositions and methods of treatment of the subject invention.

SUMMARY OF THE INVENTION

This invention relates to a compound of the formula:

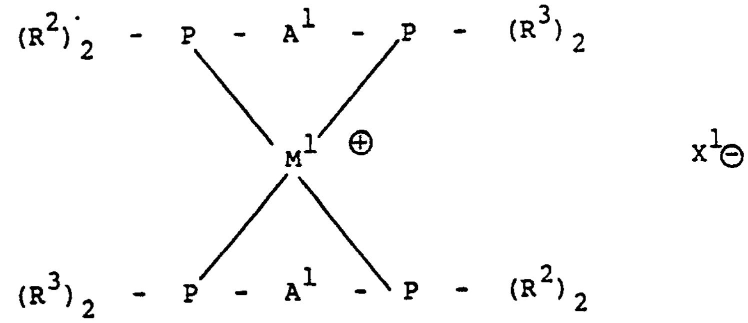

Formula (IA)

wherein

$R^2$ and $R^2$ are the same and are phenyl, ethyl or monosubstituted phenyl wherein said substituent is halo, or $R^2$ is ethyl when $R^3$ is phenyl;

$A^1$ is the same and is $(CH_2)_n$ or cis-CH=CH;

n is 2 or 3;

$X^1$ is halo, nitrato or $PF_6$; and

$M^1$ is Au(I), Ag(I) or Cu(I); provided that when $M^1$ is CU(I), $R^2$ and $R^3$ are the same and are phenyl, and $A^1$ is $(CH_2)_2$, $X^1$ is other than halo or other than nitrato; and further provided that when $R^2$ and $R^3$ are the same and are monosubstituted phenyl, $M^1$ is other than Cu(I); and further provided that when $R^2$ and $R^3$ are the same and are ethyl, $A^1$ is $(CH_2)_2$ and $M^1$ is Au(I), $X^1$ is other than halo; and further provided that when $R^2$ and $R^3$ are the same and are phenyl, $A^1$ is $(CH_2)_2$ and $M^1$ is Au(I), $X^1$ is other than chloro.

This invention also relates to a pharmaceutical composition which comprises an effective, tumor cell growth-inhibiting amount of an active ingredient and an inert, pharmaceutically acceptable carrier or

diluent, wherein said composition is useful for inhibiting the growth of animal tumor cells sensitive to the active ingredient, and wherein the active ingredient is a compound of Formula (I) or Formula (II):

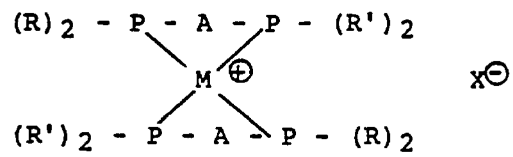

FORMULA (I)

wherein

R and R′ are the same and are phenyl, ethyl or monosubstituted phenyl wherein said substituent is halo, or R′ is ethyl when R is phenyl;

A is the same and is $(CH_2)_n$ or cis-CH=CH;

n is 2 or 3;

X is halo, nitrato or $PF_6$; and

M is Au(I), Ag(I) or Cu(I); provided that when M is Cu(I), R and R′ are the same and are phenyl, and A is $(CH_2)_2$, X is other than halo; and further provided that when R and R′ are the same and are monosubstituted phenyl, M is other than Cu(I); and further provided that when R and R′ are the same and are ethyl, A is $(CH_2)_2$ and M is Au(I), X is other than halo;

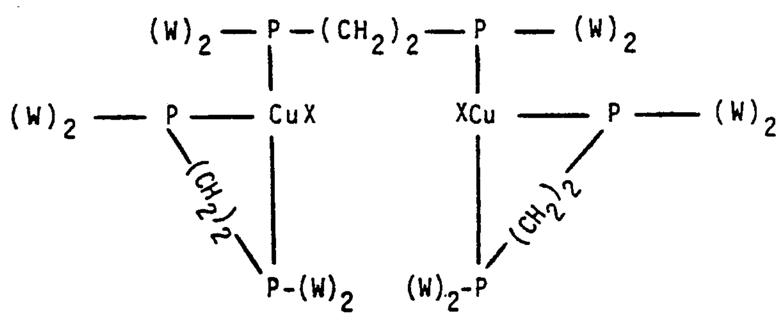

FORMULA (II)

wherein

W is the same and is phenyl; and

X is the same and is halo or nitrato although some of the compounds (I) and (II) are known compounds, none of the aforementioned references discloses or suggests the pharmaceutical compositions or the use of said compounds in methods of treatment.

This invention also relates to the use of the compounds of formula (I) and formula (II) in therapy, in particular their use in a method of inhibiting the growth of animal tumor cells sensitive to such compounds which comprises administering to an animal afflicted with said tumor cells, an effective, tumor cell growth-inhibiting amount of a compound of Formula (I) or Formula (II).

## DETAILED DESCRIPTION OF THE INVENTION

One skilled in the art will recognize that all the compounds of Formula (IA) are embraced within the scope of Formula (I).

All the compounds of Formula (I) and Formula (II) can be prepared by methods available to one skilled in this art.

Unless otherwise indicated, all the starting materials necessary to prepare the compounds of Formula (I) and Formula (II) are available from commercial sources.

Generally, to prepare the gold complexes of Formula (I) where X is chloro and R and R′ are the same and are phenyl or ethyl, or R is ethyl provided R′ is phenyl, the starting materials are the corresponding [α,ω-bis(diphenylphosphino or diethylphosphino) or (diethylphosphino-diphenylphosphino)hydrocarbon]-bis[chlorogold(I)] complexes represented by the following general structural formula:

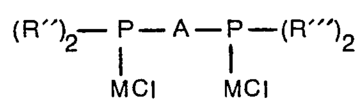

FORMULA III

in which A is as defined above, M is Au(I), and R″ and R‴ are the same and are phenyl or ethyl, or R″ is

ethyl provided that R''' is phenyl. The gold complex of Formula (III) is reacted with the appropriate bis (α,ω-diphenylphosphino or diethylphosphino) or (diethylphosphinodiphenylphosphino)hydrocarbon compound of Formula (IV),

$$(R'')_2—P—A—P—(R''')_2$$

FORMULA (IV)

in which A, R'' and R''' are as defined above. For example, the solid metal complex of Formula (III) is added to a solution of the hydrocarbon compound of Formula (IV) in a nonreactive organic solvent, such as acetone, and the mixture maintained at room temperature for 1—2 hours.

The gold complexes of Formula (III) are prepared by reaction of 1 mole equivalent of a hydrocarbon compound of Formula (IV) with 2 mole equivalents of a reduced form of chloroauric acid hydrate obtained by treatment with thiodiglycol. The necessary Formula (IV) compounds are available from commercial sources, for example, from Strem Chemicals, Inc., Danvers, Massachusetts.

Alternatively, the gold complexes of Formula (I) where X is chloro and R and R' are the same and are phenyl or ethyl, or R is ethyl provided that R' is phenyl, are prepared directly by reaction of 2 mole equivalents of a hydrocarbon compound of Formula (IV) with 1 mole equivalent of a reduced form of chloroauric acid hydrate obtained by treatment with thiodiglycol.

To prepare the gold complexes of Formula (I) where X is chloro and R and R' are the same and are monohalosubstituted phenyl, the starting materials are the corresponding (α,ω-bis[bis(monohalosubstituted phenyl)phosphino]hydrocarbon-bis[chlorogold (I)] complexes represented by the following general structural formula:

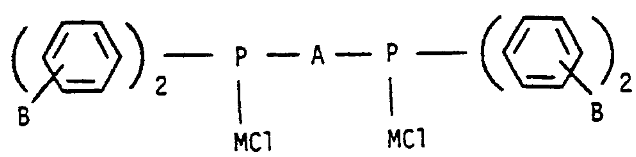

FORMULA (V)

wherein A is as defined above, M and Au(I), and B is halo. The gold complex of Formula (V) is reacted with the appropriate bis[α,ω-(dimonohalosubstituted-phenyhl-phosphino)hydrocarbon compound of Formula (VI):

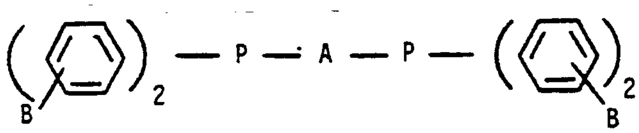

FORMULA (VI)

wherein A and B are as defined above. For example, the dry, powdered derivative of Formula (V) is added to a solution of the appropriate Formula (VI) compound in a nonreactive organic solvent, such as acetone.

The gold complexes of Formula (V) are prepared by reaction of 1 mole equivalent of the appropriate Formula (VI) compound with 2 mole equivalents of a reduced form of chloroauric acid hydrate obtained by treatment with thiodiglycol. The compounds of Formula (VI) are prepared by reacting the appropriate monohalosubstituted phenyl magnesium bromide compound with the appropriate bis(dichlorophosphino)hydrocarbon ligand, which are available from commerical sources, such as Strem Chemicals Inc., Danvers, Massachusetts. The necessary magnesium bromide compounds can be prepared by methods known to one of skill in the art, for example, by reacting the appropriate monohalosubstituted phenyl compound with magnesium bromide.

Another method which may be utilized by one of skill in the art to prepare gold(I) compounds of Formula (III) is the method of McAnliffe et al., *J.C.S. Dalton,* 1730 (1979), i.e. reacting sodium tetrachloroaurate with the appropriate Formula (IV) or Formula (VI) compound.

Another method which may be utilized by one of skill in the art to prepare gold(I) compounds of Formula (I) is the method of Cariati et al., *Inorg. Chim. Acta,* *1*(2), 315—18 (1967), i.e. reacting 1 mole of a solution of hydrogen tetrachloroaurate in ethanol with two moles of the appropriate Formula (IV) or Formula (VI) compound.

To prepare the gold complexes of Formula (I) where X is nitrate, the corresponding Formula (I) products where X is chloro are treated with, for example, sodium nitrate in acetone solution. To prepare the gold complexes of Formula (I) where X is hexafluorophosphate, the corresponding products where X is chloro are treated with, for example, sodium hexafluorophosphate in water solution.

The silver complexes of Formula (I) wherein X is nitrato and R and R' are the same and are phenyl or ethyl, or R is ethyl provided that R' is phenyl, are similarly prepared by reaction of 2 mole equivalents of the

appropriate compound of Formula (IV) with 1 mole equivalent of silver nitrate in a nonreactive organic solvent, such as acetone, at room temperature for one-half to one hour.

The silver complexes of Formula (I) wherein X is chloro and R and R′ are the same and are monohalosubstituted phenyl are similarly prepared by reacting the appropriate Formula (V) compound wherein M is Ag(I) with the appropriate Formula (VI) compound.

The silver complexes of Formula (V) are prepared by reacting the appropriate Formula (VI) compound with silver(I) nitrate.

To prepare the silver complexes of Formula (I) wherein X is chloro, the corresponding Formula (I) products where X is nitrato are treated with, for example, sodium chloride in aqueous acetone solution. To prepare the silver complexes of Formula (I) wherein X is hexafluorophosphate, the corresponding products where X is nitrato are treated with, for example, sodium hexafluorophosphate in water solution.

The copper complexes of Formula (I) wherein X is chloro and R and R′ are the same and are phenyl and A is cis$-CH=CH$ or $(CH_2)_3$, or R and R′ are the same and are ethyl or R is ethyl provided that R′ is phenyl and A is as defined above are similarly prepared by reacting the appropriate Formula (IV) compound with 0.5 mole equivalent of copper(I) chloride.

The copper complex of Formula (II) wherein X is chloro can be prepared by reacting copper(I) chloride with 1,2-bis(diphenylphosphino)ethane, available from commercial sources such as Strem Chemicals, Inc., Danvers, Massachusetts, in chloroform.

To prepare the copper complexes of Formula (I) or Formula (II) where X is nitrate, one of skill in the art may employ the method of Carty et al., *Can J. Chem., 49,* 761—6 (1971), i.e. reacting an excess of the appropriate Formula (IV) compound with copper(II) nitrate.

To prepare the copper complexes of Formula (I) where X is hexafluorophosphate, the corresponding products where X is chloro are treated with, for example, sodium hexafluorophosphate in water solution.

As stated above, the active ingredients used herein have tumor cell-growth inhibiting activity which has been demonstrated in a variety of test systems.

The B16 melanoma cell assay measures the ability of a compound to inhibit the clonogenic capacity of cells *in vitro* following a two-hour exposure the compound. Initially, the cytotoxic activity of the Formula (I) and Formula (II) compounds was evaluated *in vitro* using B16 melanoma cells according to the following assay:

B16 melanoma (highly metastatic subline, F10) are used and maintained as monolayer cultures in Minimal Essential Media (Grand Island Biological Co., Grand Island, N.Y.) supplemented with 10% calf serum, 1% antibiotics in a 5% $CO_2$ humidified incubator at 37°C. Asynchronous populations of cells are harvested and replated to 5000 cells/plate in sterile 60 mm × 15 mm petri plates. Plates are incubated overnight to allow attachment of the cells to the plate. Cells are treated with a Formula (I) or Formula (II) compound or cisplatin under sterile conditions, allowed to react for 2 hours followed by aspiration of medium. Plates are washed one time with 5 ml of phosphate buffered saline (PBS), followed by the addition of 5 ml of fresh media. Plates are incubated for 5 days at 37° in a $CO_2$ incubator. Viability is measured by the ability of a cell to form a colony of greater than 50 cells. Colonies are fixed with 0.5% crystal violet in 95% ethanol. Plates are dried and counted with a Biotran III Automatic Count Totalizer (New Brunswick Scientific Co., Edison, N.J.). Mean and standard deviation of triplicate samples are determined for each drug concentration. The data are analyzed by plotting the log of the survival fraction (number of colonies in drug treated plates/number of colonies in controls) versus the drug concentration.

An evaluation of several compounds of Formula (I) in the *in vitro* B16 melanoma assay is shown in Table I.

TABLE I

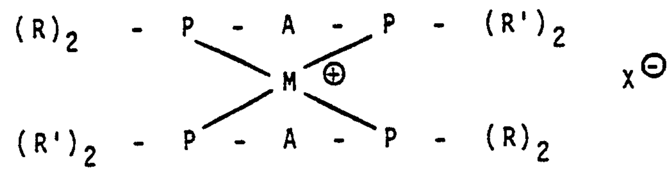

| Compound Number | R | R' | A | M | X | $IC_{50}$ (a) (μM) |
|---|---|---|---|---|---|---|
| 1 | phenyl | phenyl | $(CH_2)_2$ | Au(I) | Cl | 4.5 |
| 2 | phenyl | phenyl | $(CH_2)_2$ | Ag(I) | $NO_3$ | 4 |
| 3 | phenyl | phenyl | cis-CH=CH | Au(I) | Cl | 2 |
| 4 | phenyl | phenyl | $(CH_2)_3$ | Au(I) | Cl | 0.6 |

[a]Concentration which inhibits cloning efficiency of B16 melanoma cells by 50% on a 2-hour exposure

Additionally, in another *in vitro* assay, Compound No. 1 from Table I effectively killed HT-29 human colon carcinoma cells following a 2-hour exposure to concentrations below the 10uM level.

P388 lymphocyte leukemia is currently the most widely used animal tumor model for screening for antitumor agents and for detailed evaluation of active compounds. This tumor system is widely accepted as an antitumor agent screening tool because it is sensitive to virtually all of the clinically active antineoplastic agents; quantitative and reproducible; amenable for large-scale screening; and predictive for activity in other animal tumor models. Drugs that are highly active in the intraperitoneal (ip) P388 tumor model are generally active in other tumor models as well. The antitumor activity of the compounds of Formula (I) and Formula (II) is demonstrated in the P388 leukemia mouse model employing the following protocol:

$10^6$ P388 leukemia cells are inoculated ip in $B6D2F_1$ mice. Twenty-four hours later, if the tumor inoculum proves to be free of bacterial contamination (as determined by 24 hours incubation in thioglycollate broth), animals are randomized into groups of 6 and housed in shoebox cages. Metal complexes are dissolved in a minimal volume of either N,N-dimethylacetamide (DMA) or 95% ethanol (depending upon solubility). An equal volume of saline is added; if the drug comes out of solution an equal volume of Cremophor (polyethoxylated castor oil) is added and then saline qs to a concentration such that the desired dose is delivered in 0.5 ml. The final concentration of DMA, ethanol and Cremophor is 10 per cent. Dilutions for lower doses are made with saline so there is a decreasing proportion of organic solvents in the vehicle with decreasing dosage. These vehicles provide soluble formulations (or suspensions). Formulations are prepared immediately prior to injection. The Formula (I) and Formula (II) compounds are administered ip on Days 1 through 5 (i.e. treatment is initiated 24 hrs after tumor inoculation). Each experiment includes three groups of 6 animals as untreated controls and animals treated with a positive control, cisplatin, at two dose levels. Animals are weighed as a group on Days 1, 5 and 9 and average weight change (Δ wt.) is used as a reflection of toxicity. Each experiment also includes an inoculum titration — groups of 8 mice inoculated ip with $10^5$ to $10^0$ P388 leukemia cells. The titration is used to calculate cell kill achieved by treatment with drugs. Animals are monitored daily for mortality and experiments are terminated after 45 days. The endpoint is median survival time (MST) and increase in lifespan (ILS) which is the percentage of increase in MST relative to untreated controls. Untreated controls inoculated ip with $10^6$ P388 leukemia cells generally survive for a median of 10 or 11 days. A drug is considered active if it produces ≥25 percent ILS.

A summary of an evaluation of the Formula (I) compounds in the *in vivo* P388 leukemia model is shown in Table II.

TABLE II

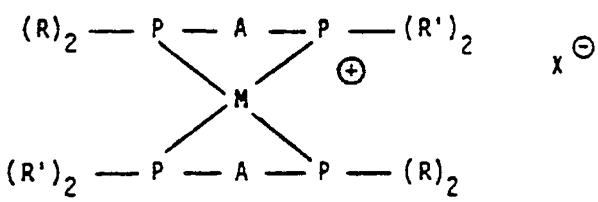

| Compound Number | R | R' | A | X | M | MTD[a] (mg/kg) | ILS max[b] (%) |
|---|---|---|---|---|---|---|---|
| 1 | phenyl | phenyl | $(CH_2)_2$ | Cl | Au(I) | 3 | 86±25[c] |
| 2 | phenyl | phenyl | $(CH_2)_2$ | $NO_3$ | Ag(I) | 3 | 89/90[d] |
| 3 | phenyl | phenyl | cis-CH=CH | Cl | Au(I) | 1.5 | 116/80/68 |
| 4 | phenyl | phenyl | $(CH_2)_3$ | Cl | Au(I) | 3 | 84/120/64 |
| 5 | phenyl | phenyl | $(CH_2)_2$ | $NO_3$ | Au(I) | 3 | 115/70 |
| 6 | p-fluoro phenyl | p-fluoro phenyl | $(CH_2)_2$ | Cl | Au(I) | 3 | 55/50 |
| 7 | m-fluoro phenyl | m-fluoro phenyl | $(CH_2)_2$ | Cl | Au(I) | 12 | 45/55 |
| 8 | phenyl | ethyl | $(CH_2)_2$ | Cl | Au(I) | 3 | 60/75 |
| 9 | phenyl | ethyl | $(CH_2)_2$ | Cl | Cu(I) | 1.5 | 48/45 |
| 10 | ethyl | ethyl | $(CH_2)_2$ | $PF_6$ | Au(I) | 4 | 40/30 |
| 11 | ethyl | ethyl | $(CH_2)_2$ | $NO_3$ | Ag(I) | 0.5 | 50/40 |
| 12 | phenyl | phenyl | $(CH_2)_3$ | Cl | Cu(I) | 2 | 82/110/85 |
| 13 | phenyl | phenyl | cis-CH=CH | Cl | Cu(I) | 2 | 45/90/75 |

(a) maximally tolerated dose for B6D2F female mice on an ip qDX5 regimen.
(b) maximum increase in lifespan produced in mice bearing ip P388 leukemia.
(c) data based on 21 different experiments.
(d) figures separated by slashes represent data generated in separate experiments.

Additionally, the Formula (II) compound wherein X is chloro was tested twice in the ip P388 leukemia model and exhibited an ILS of 100% and 115% at at MTD of 2 mg/kg.

Based on the data set forth in Tables I and II, the compounds of Formula (I) and Formula (II) showed significant cytotoxicity and antitumor activity. In particular, the compound of Formula (I) wherein R and R' are phenyl, A is $(CH_2)_2$, M is Au(I) and X is Cl has confirmed activity in the P388 leukemia mouse assay with an ILS comparable to the clinically useful antitumor agent cisplatin.

Another chemosensitive tumor model is intraperitoneally implanted M5076 reticulum cell sarcoma in mice. In this system B6D2F, female mice are inoculated with 0.5 ml of a 10 percent (w:v) brei of M5076 prepared from pooled sc tumors excised at about 21 days from C57B1/6 donors. Drugs are administered ip. Daily treatment is begun 24 hours after implantation and is continued for ten days. The treatment regimen for M5076 is more prolonged than for P388 because of the slower growth rate and longer control survival time of the M5076 tumor. Compounds of Formula (I) and Formula (II) were evaluated in this assay. An evaluation of several compounds of Formula (I) in the M5076 reticulum cell sarcoma assay at their maximally tolerated dose (MTD) is set forth in Table III. An ILS of ≥25% indicates activity in this tumor model.

TABLE III

| Compound No. (a) | MTD (mg/kg) (b) | ILS (max) (c) (%) |
|---|---|---|
| 1 | 2 | 56/83/52/47 |
| 2 | 2 | 48 |
| 3 | 2.4 | 69 |
| 4 | 2 | 116 |
| 8 | 2 | 46 |

(a) see Table II for structures
(b) maximally tolerated dose for B6D2F female mice on an ip qDX10 regimen.
(c) maximum increase in lifespan produced in mice bearing ip M5076 reticulum cell sarcoma (figures separated by slashes were generated in separate experiments).

Additionally, the Formula (II) compound wherein X is chloro was tested in the M5076 reticulum cell sarcoma assay and exhibited an ILS of 60% at a MTD of 1.6 mg/kg.

The cytotoxic activity of several Formula (I) and Formula (II) compounds was evaluated *in vivo* using B16 melanoma cells. In this system, groups of eight $B6D2F_1$ mice were inoculated ip with 0.5 ml of a 10% (w:v) brei of B16 melanoma prepared from pooled sc tumors excised at 14—21 days from $C67B_1/6$ donor mice. Daily treatment is begun 24 hours after tumor implantation and is continued daily for ten (10) days. The route of drug administration is ip. The mice are monitored daily for survival for sixty (60) days. Antitumor activity is assessed by prolongation of median survival time. An ILS of ≥25% indicates activity in this tumor model.

A summary of the results of the *in vivo* ip B16 melanoma assay is shown in Table IV.

TABLE IV

| Compound No. (a) | MTD (mg/kg) (b) | ILS (%) (c) |
|---|---|---|
| 1 | 2 | 50/43/33 |
| 4 | 2 | 34/28 |

(a) see Table A for structure.
(b) maximally tolerated dose for $B6D2F_1$ mice on an ip qDx10 regimen.
(c) maximum increase in lifespan produced in mice bearing ip B16 melanoma (figures separated by a slash were generated in separate experiments).

Additionally, the Formula (II) compound wherein X is chloro was tested in the ip B16 melanoma assay and exhibited an ILS of 54% at a MTD of 1 mg/kg.

Compound No. 1 from Table II was also tested in a further *in vivo* tumor model, mammary adenocarcinoma 16/c, a tumor model sensitive to DNA binders and alkylating agents. In this experiment, the tumor was implanted sc in C3H mice, and the drug was administered ip or iv on an intermittant treatment schedule, i.e., once on days 1, 5, 9, 13 and 17. Tumors were measured 3 weeks after implantation, and activity was assessed by degree of tumor growth inhibition. Cisplatin, a drug which generally produces

complete inhibition of the growth of mammary adenocarcinoma 16/c, was used as a positive control. A tumor growth inhibition of ≥75% indicates that a drug is active in this type of animal tumor model. The results of this assay are summarized in Table V.

TABLE V

| Drug | Regimen Route and Schedule of Administration | Optimal Dose (mg/kg) | Mean Tumor Volume ($mm^3$) on Day 21 | Inhibition (%) | N.P.* |
|---|---|---|---|---|---|
| | | | Experiment 1 | | |
| Control | | | 1187 ± 999 | | 1/24 |
| Cisplatin | Ip, q40 × 5 | 6 | 30 ± 64 | 97 | 6/8 |
| Compound[(a)] No. 1 | Ip, q40 × 5 | 8 | 96 ± 143 | 92 | 4/7 |
| | | | Experiment 2 | | |
| Control | | | 1113 ± 626 | | 0/23 |
| Cisplatin | Ip, q40 × 5 | 6 | 0 | 100 | 8/8 |
| | Iv, q40 × 5 | 6 | 21 ± 61 | 98 | 7/8 |
| Compound No. 1 | Ip, q40 × 5 | 6 | 430 ± 291 | 61 | 0/8 |
| | Iv, q40 × 5 | 12 | 181 ± 163 | 84 | 2/8 |
| | | | Experiment 3 | | |
| Control | | | 936 ± 353 | | 0/24 |
| Cisplatin | Ip, q40 × 5 | 6 | 586 ± 266 | 37 | 0/8 |
| Compound No. 1 | Ip, q40 × 5 | 8 | 0 | 100 | 5/5 |

* — N.P. = Proportion of mice without palpable tumors on Day 21
[a] — See Table II for structure

Likewise, Compound No. 1 from Table II was tested in an additional *in vivo* tumor model known as ADJ—PC6 Plasmacytoma. In this assay, tumor cells are carried by serial subcutaneous (sc) passage in BALB/c female mice and then collected aseptically on ca. day 21 and minced in Hank's balanced salt solution. The cells are then dispersed by homogenization in a loose-fitting teflon glass homogenizer, and cell concentration is adjusted to 4 × $10^6$ viable (trypan blue-excluding) cells per ml by hemocytometer counts. A total of 0.5 ml (2 × $10^6$ cells) is implanted sc on the right flank of BALB/c female mice in groups of 8. Treatment is given ip on Days 1—10 or iv on Days 1—5, and tumors are measured in perpendicular diameters with a vernicular caliper on Day 18. Tumor volume is calculated by multiplying length × width$^2$ × 0.5. Generally, ≥75% inhibition of tumor growth reflects significant antitumor effect. Cisplatin, the positive control compound, produces complete tumor growth inhibition. The results of this assay are summarized in Table VI.

TABLE VI

| Dose (mg/kg) | Dosage regimen | Tumor Growth Inhibition (Day 18) N.P. (a) | MTV (b) | % Inhibition |
|---|---|---|---|---|
| 3 | ip, qD1-10 | 6/6 | 0 ± 0 | 100 |
| 12 | iv, qD1-5 | 3/6 | 67 ± 71 | 89 |
| 3 | ip, qD1-10 | 0/8 | 252 ± 220 | 58 |

(d) - N.P. = Proportion of mice without palpable tumor on Day 18.

(b) - MTV = Mean Tumor Volume ($mm^3$) on Day 18.

Additionally, Compound No. 1 from Table II was tested in another *in vivo* tumor model known as subcutaneous M5076 reticulum cell sarcoma in mice according to the following protocol:

$B6D2F_1$ female mice are inoculated sc in the flank with 0.5 ml of a 10% (w:v) brie of M5076 prepared from pooled sc tumors excised at about Day 21 from $C57B_1/6$ donors. Treatment is initiated one day after tumor implantation, and is continued daily for 10 days. Tumors are measured 21 days after tumor implantation activity is determined by the degree of tumor growth inhibition. Generally, ≥75 inhibition of tumor growth reflects significant antitumor effect. Cisplatin, the positive control compound, produces complete tumor growth inhibition. The results of this assay are summarized in Table VII.

TABLE VII

| Dose (mg/kg) | Dosage regimen | Tumor Growth Inhibition (Day 21) N.P. (a) | MTV (b) | % Inhibition |
|---|---|---|---|---|
| 2 | ip, qDX10 | 2/7 | 61 ± 39 | 91 |
| 2 | ip, qDX10 | 1/7 | 168 ± 112 | 48 |

(a) - N.P. = Proportion of mice without palpable tumor on Day 21.

(b) - MTV = Mean Tumor Volume ($mm^3$) on Day 21.

The pharmaceutical compositions of this invention comprise an effective tumor cell growth-inhibiting amount of a compound of Formula (I) or Formula (II), and an inert pharmaceutically acceptable carrier or diluent. These compositions are prepared in dosage unit form appropriate for parenteral administration.

Compositions according to the invention for parenteral administration include sterile aqueous or nonaqueous solutions, suspensions or emulsions. The composition may be in the form of a solution of the active ingredient in a minimal volume of dimethylacetamide or ethanol, for example 5% v/v, brought up to volume with peanut oil or normal saline solution. Polyethoxylated castor oil, for example 2 to 5% v/v, may also be used to solubilize the active ingredient. In addition, the composition may be in the form of a slurry with, for example, hydroxypropyl cellulose or other suitable suspending agent. As an emulsifying agent, lecithin for example may be used. The composition may also be provided in the form of a sterile solid which can be dissolved in a sterile injectable medium immediately before use.

It will be appreciated that the actual preferred dosages of the compounds of Formula (I) or Formula (II) used in the compositions of this invention will vary according to the particular complex being used, the particular composition formulated, the mode of administration and the particular site, host and disease being treated. The route of internal administration should be selected to ensure that an effective tumor cell growth inhibiting-amount of the metal complex contacts the tumor. Optimal dosages for a given set of conditions can be ascertained by those skilled in the art using conventional dosage determination tests in view of the above experimental data. For parenteral administration the dose generally employed is from about 5 mg to about 20 $mg/m^2$ of body surface per day for one to five days, repeated about every fourth week for four courses of treatment.

When using the compounds in therapy a compound of Formula (I) and Formula (II) is administered to a host animal afflicted with tumor cells. As described above, during the course of treatment the active ingredient will be administered parenterally in an amount selected from about 300 mg to about 1000 mg.

EXAMPLES

The following examples illustrate the chemical preparation of several compounds of Formula (I) and Formula (II) used in the compositions and methods of this invention and as such are not to be construed as limiting the scope thereof. All temperatures are in degrees Centigrade.

Example 1

Bis[1,2-Bis(diphenylphosphino)ethane]Gold(I) Chloride

*Method A*

Sodium chloroaurate hydrate (0.45 g, 1.1 mmol) was reduced to gold (I) by thiodiglycol (0.28 g, 2.2 mmol) in 7 ml of 2.5:1 aqueous acetone. When the solution became colorless 1,2-bis(diphenylphosphino)ethane (0.22 g, 0.55 mmol), obtained from Strem Chemicals, Inc., Danvers, Massachusetts, in 10 ml of acetone was added dropwise over 5 minutes. After stirring for one hour, the white solid [1,2-bis(diphenylphosphino)ethane]bis-[chlorogold(I)] was filtered off, washed with water and then acetone, yield 95%, melting point (m.p.) 262—267°.

[1,2-Bis(diphenylphosphino)ethane]bis-[chlorogold(I)] (0.89 g, 1.025 mmol), prepared as described above, was added as a solid to a soltion of 1,2-bis(diphenylphosphino)ethane (1.35 g, 3.38 mmol), obtained from Strem Chemicals, Inc., Danvers, Massachusetts, in about 25 ml of acetone. The resultant clear solution was stirred for one hour and crystals were obtained by cooling overnight at 3°. A second crop of product was obtained by concentrating the solvent at room temperature, total yield 70%, m.p. 155—270°.

*Method B*

Sodium chloroaurate hydrate (0.5 g, 1.35 mmol) was reduced by thiodiglycol (0.33 g, 2.70 mmol) in aqueous acetone (2.5:1, 7 ml). The solution was cooled to 0—5° and added dropwise with stirring to a solution of 1,2-bis(diphenylphosphino)ethane (1.07 g, 2.70 mmol), obtained from Strem Chemicals, Danvers, Massachusetts, in about 30 ml of acetone. A clear colorless solution resulted which was stirred for 30 minutes and then the solvent was concentrated to 10 ml at room temperature. The solid product was obtained by addition of water, was recrystallized from aqueous methanol, washed with cold aqueous methanol and dried *in vacuo,* yield 79%, m.p. between 173—277°C in 3 stages.

Example 2

Bis[1,3-Bis(diphenylphosphino)propane]Gold(I) Chloride

Sodium chloroaurate (2 mol eq) was reduced *in situ* by thiodiglycol (4 mol eq) in 3:1 aqueous acetone and 1,3-bis(diphenylphosphino)propane (1 mol eq), obtained from Strem Chemicals, Inc., Danvers, Massachusetts, in a minimum volume of acetone was added dropwise to give an immediate white precipitate, [1,3-bis(diphenylphosphino)propane]bis[chlorogold(I)]. This was filtered, washed with water, then ether and dried *in vacuo*, yield 77%, m.p. 245—255°.

Solid [1,3-bis(diphenylphosphino)propane]bis[chlorogold(I)] (140 mg, 0.16 mmol), prepared as described above, was added to a stirred solution of 1,3-bis(diphenylphosphino)propane (198 mg, 0.48 mmol), obtained from Strem Chemicals, Inc., Danvers, Massachusetts, in 5 ml of acetone. The solid completely dissolved and a white crystalline solid immediately separated from the solution. This was filtered and washed with cold acetone and ether. A second crop was obtained by adding water to the cloud point, total yield 70%, m.p. 193—195°.

Example 3

Bis[1,2-bis(diphenylphosphino)ethane]Gold(I) Nitrate

Solid [1,2-bis(diphenylphosphino)ethane]bis[chlorogold(I)] (0.40 g, 0.46 mmol), prepared as described in Example I, was added to a solution of bis(1,2-diphenylphospino)ethane (0.55 g, 1.39 mmol), obtained from Strem Chemicals, Inc., Danvers, Massachusetts, in 25 ml of acetone. The resultant clear solution was stirred for 30 minutes and then sodium nitrate (0.40 g, 4.6 mmol) in 10 ml of water was added. The product was obtained as a white crystalline solid by slow evaporation of the solvent at room temperature, and was washed with water and dried *in vacuo*, m.p.. 190—200°.

Example 4

Bis[cis-1,2-bis(diphenylphosphino)ethylene]Gold(I) Chloride

Sodium chloroaurate hydrate (0.5 g, 1.35 mmol) was reduced by thiodiglycol (0.33 g, 2.70 mmol) in 7 ml of 2.5:1 aqueous acetone giving a clear colorless solution. The cooled solution was added with stirring to a solution of cis-bis(1,2-diphenylphosphino)ethylene (1.07 g, 2.7 mmol), obtained from Strem Chemicals, Inc., Danvers, Massachusetts, in 25 ml of acetone. The product crystallized from solution after reducing the volume to 10 ml, was filtered, washed thoroughly with water and then dried *in vacuo*, yield 88%, m.p. 226—250°.

Example 5

Bis[1,2-bis(diphenylphosphino)ethane]Silver(I) Nitrate

Silver nitrate (0.10 g, 0.60 mmol) in 1 ml of water was added to a solution of 1,2-bis(diphenylphosphino)ethane (0.50 g, 1.25 mmol), obtained from Strem Chemicals, Inc., Danvers,

Massachusetts, in 25 ml of acetone. The clear solution was stirred for 30 minutes, the volume reduced to about 10 ml and the product precipitated by the addition of about 50 ml of water. White needles were obtained by recrystallization from acetone/water, washed with water and dried *in vacuo*, yield 90%, m.p. 225—230°.

Example 6

Bis[1,2-bis(diethylphosphino)ethane]Silver(I) Nitrate

Solid silver nitrate (0.21 g, 1.22 mmol) was added to a solution of 1,2-bis(diethylphosphino)ethane (0.51 g (0.55 ml), 2.45 mmol), obtained from Strem Chemicals, Inc., Danvers, Massachusetts, in $CHCl_3$ (5 ml). The crystals all dissolved after a few minutes, and the clear solution was stirred for 30 minutes. The solvent was evaporated at room temperature, leaving a clear oil, then the complex was isolated as a white powder by repeated scratching in ice-cold $Et_2O$ and hexane and was dried *in vacuo*, yield 70%, m.p. 104—114°.

Example 7

Bis[1,2-bis(diphenylphosphino)ethane]Gold(I) Chloride

Alternatively, the named product can be prepared by the method of Cariati et al., *Inorg. Chim. Acta.*, *1*(2), 315—318 (1967), according to the following procedure: A solution of hydrogen tetrachloroaurate (5.13 mmoles, 1.01 g Au) in ethanol is treated with 1,2-bis(diphenylphosphino)ethane (10.3 mmoles, 4.10 g). The solution is then evaporated and the residue dissolved in chloroform is precipitated by addition of n-butylether.

Example 8

Bis[1,2-bis(diethylphosphino)ethane]Gold(I) Hexafluorophosphate

Solid [1,2-bis(diethylphosphino)ethane]bis[chlorogold(I)], (0.53 g, 0.79 mmol) prepared as described in Example 1, was suspended in acetone (10 ml) and 1,2-bis(diethylphosphino)ethane (0.54 g (0.58 ml), 2.61 mmol), obtained from Strem Chemicals, Inc., Danvers, Massachusetts, was added dropwise. After stirring for a few minutes, a clear solution was obtained. This was stirred for 30 minutes, and then $NaPF_6$ (0.27 g, 1.58 mmol) in $H_2O$ (3 ml) was added dropwise. The volume was reduced to 5 ml, and the complex obtained as a white solid after the addition of $H_2O$ (25 ml), and recrystallization from EtOH, yield 83%, m.p. 240—255°.

Example 9

Bis[1-diethylphosphino-2-diphenylphosphino)ethane]Copper(I) Chloride

Solid copper(I) chloride (0.081 g, 0.81 mmol) was added to a fresh solution of (1-diethylphosphino-2-diphenylphosphino)ethane (0.54 g (0.50 ml), 1.79 mmol), obtained from Strem Chemicals, Inc., Danvers, Massachusetts, in $CHCl_3$ (10 ml) in an $N_2$ atmosphere. After stirring under a steady stream of $N_2$ for 2 hours, all the solid had dissolved, hexane (10 ml) was added, and the solution was left at 3° for 24 hours. The solvent was decanted from the clear oily residue, and the product was obtained as a white solid after scratching the oil in ice cold acetone (1 ml) and ice cold hexane (1 ml), yield 0.42 g, m.p. 112—115°.

Example 10

Bis[(1-diethylphosphino-2-diphenylphosphino)ethane]Gold(I) Chloride

Solid [bis(1-diethylphosphino-2-diphenylphosphino)ethane] bis[chlorogold (I)] (0.26 g, 0.34 mmol) [prepared with (1-diethylphosphino-2-diphenylphosphino)ethane substantially in accordance with the procedure described in Exmaple 1] was added to a solution of (1-diethyl-phosphino-2-diphenylphosphino)ethane (0.34 g, (0.31 ml) 1.12 mmol) obtained from Strem Chemicals, Inc., Danvers, Massachusetts, in $CHCl_3$ (10 ml) giving a clear colorless solution. This was stirred for 30 minutes, and then the solvent was evaporated to dryness at room temperature giving a clear gum. The product was obtained as a white solid by scratching the gum in ice-cold $Et_2O$, yield 90%, m.p. 170—200°.

Example 11

Tris[1,2-bis(diphenylphosphino)ethane]Dicopper(I) Chloride

Copper(I) chloride (0.087 g, 0.88 mmol) was added as a solid to a solution of [1,2-bis(diphenylphosphino)ethane] (0.88 g, 2.2 mmol), obtained from Strem Chemicals, Inc., Danvers, Massachusetts, in chloroform (10 ml). After stirring for two hours under a steady stream of $N_2$, all the solid had dissolved. The product was obtained as a white precipitate, by the addition of hexane (5 ml), on cooling to 3°, and was filtered and dried *in vacuo;* yield 50%, m.p. 260—270°.

Example 12

Bis[1,2-bis[bis(4-fluorophenyl)phosphino]ethane Gold(I) Chloride

Thiodiglycol, 2.1 g (0.017 mol) was added to a stirred solution of 2.47 g (0.006 mol) of chloroauric acid in a mixture of 10 ml water and 30 ml $CH_3OH$. When a colorless solution resulted, 1.30 g (0.00276 mol) of 1,2-ethanediyl-bis[bis(4-fluorophenyl)phosphine], [prepared by reacting 1,2-bis(dichlorophosphino)ethane, obtained from Strem Chemicals, Inc., Danvers, Massachusetts, with a Grignard reagent of 4-fluorophenyl

magnesium bromide in THF] in a mixture of 30 ml $CHCl_3$—30 ml $CH_2OH$ was added dropwise with cooling. After the addition was complete, the reaction mixture was stirred an additional 30 minutes. The product (separated solid) was removed, dried and yielded 2.55 g of μ-[1,2-bis[(4-fluorophenyl)phosphino]ethane]-bis[chlorogold(I)] with a melting point of 271—272°.

Dry, powdered μ-[1,2-bis[(4-fluorophenyl)phosphino]ethane]bis[chlorogold(I)] (0.561 g, 0.6 mmol), prepared as described above, was stirred into a solution containing 0.847 g (1.8 mol) of 1,2-ethanediyl-bis[bis(4-fluorophenyl)phosphine], prepared as described above, in 15 ml of acetone. The resulting solution was filtered and the filtrate concentrated under reduced pressure to an amorphous solid. Crystallization of the solid from $MeOH/H_2O$ gave 0.91 g of the named product, m.p. 229—230°.

Example 13

Bis[1,2-bis[bis(3-fluorophenyl)phosphino]ethane]Gold(I) Chloride

A solution containing 2.73 g (5.8 mmol) of 1,2-ethanediyl-bis[bis(3-fluorophenyl)phosphine], prepared using 3-fluorophenyl magnesium bromide substantially in accordance with the procedure outlined in Example 12, in 25 ml of acetone was stirred into an ice-cooled solution of gold(I), prepared by adding 0.87 ml (8.7 mmol) of thiodiglycol to a mixture of 5 mL $H_2O$/20 ml $CH_3OH$ containing 1.196 g (2.9 mmol) of chloroauric acid tetrahydrate. The semisolid residue that separated on refrigeration overnight was solidified by trituration under ether. Recrystallization from $CH_2Cl_2$/toluene gave 1.267 g of named product, m.p. 235—245°.

Example 14

Bis[1,3-bis(diphenylphosphino)propane]Copper(I) Chloride

Copper(I) chloride (0.132 g, 1.33 mmol) was added as a solid to a solution of 1,3-bis(diphenylphosphino)propane (1.108 g, 2.68 mmol), obtained from Strem Chemicals, Inc., Danvers, Massachusetts, in chloroform (*ca* 50 ml). After stirring for 1 hour under a steady stream of $N_2$, the solid had dissolved, giving a yellow solution. The solvent was removed by rotary evaporation, and the oily residue was solidified by repeated trituration in ice-cold hexane (1 ml) and ice-cold diethylether (1 ml). The product was recrystallized from MeOH (3 ml) by the addition of $H_2O$ (10 ml), and was dried *in vacuo*; yield 60%, m.p. 90—115°.

Example 15

Bis[cis-1,2-bis(diphenylphosphino)ethylene]Copper(I) Chloride

Copper(I) chloride (0.078 g, 0.79 mmol) was added as a solid to a solution of [cis-1,2-bis(diphenylphosphino)ethylene (0.66 g, 1.66 mmol), obtained from Strem Chemicals, Inc., Danvers, Massachusetts, in chloroform (*ca* 25 ml). After stirring for 1 hour under a steady stream of $N_2$, the solid dissolved, giving a yellow solution. The volume was reduced to 5 ml by rotary evaporation, and white crystals formed on cooling to 0°. These were filtered and recrystallized from MeOH (5 ml) after the addition of $H_2O$ (20 ml), and were dried *in vacuo*; yield 70%, m.p. 169—178°.

Example 16

Tris[1,2-bis(diphenylphosphino)ethane]dicopper(I) Nitrate

The named product can be prepared by the method of Carty et al., *Can J. Chem., 49,* 761—766 (1971), according to the following procedure; copper(II) nitrate is reduced by excess 1,2-bis(diphenylphosphino)ethane in hot ethanol, and then n-hexane is added which yields colorless crystals of the named product, m.p. 131—135°.

Example 17

Bis[1,2-bis(diphenylphosphino)ethane]copper(I) Nitrate

The named product can be prepared by the method of Carty et al., *Can J. Chem., 49,* 761—766 (1971), according to the following procedure: the named product can be isolated from solutions of the product of Example 16 by bubbling oxygen through a refluxing ethanolic solution for 3 hours. Large crystals of the named product can be obtained on slow evaporation, m.p. 213—215°.

Example 18

Bis[1,2-bis(diphenylphosphino)ethane]gold(I) Bromide

The named product can be prepared by the method outlined in Example 1, Method B, except that 4 equivalents of sodium bromide were mixed with sodium chloroaurate hydrate in the initial water solution (5 ml). The named product was obtained in 73% yield, m.p. 182—188°.

Example 19

Bis[1,2-bis(diphenylphosphino)ethane]gold(I) Iodide

The named product can be prepared by the method outlined in Example 1, Method B, except that a four-fold excess of sodium iodide (in 1 ml $H_2O$) with respect to gold was added to the solution of [1,2-bis(diphenylphosphino)ethane]gold(I) chloride *in situ* before addition of $H_2O$ to precipitate the named iodide complex, m.p. 165—170°.

Example 20

As a specific embodiment of a pharmaceutical composition of this invention, an active ingredient, such as one part of the complex of Example 1, is dissolved in 5 parts of dimethylacetamide and 5 parts of polyethoxylated castor oil and then normal saline solution qs, and is administered parenterally in one dose of 5 $mg/m^2$ to inhibit the growth of tumor cells sensitive to the active ingredient in an animal afflicted by such tumor cells.

**Claims for the Contracting States: BE CH DE FR GB IT LI LU NL SE**

1. A compound of the formula (I) or (II):

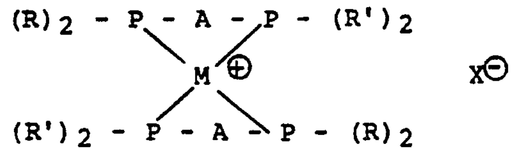

FORMULA (I)

wherein

R and R′ are the same and are phenyl, ethyl or monosubstituted phenyl wherein said substituent is halo, or R′ is ethyl when $R^3$ is phenyl;

A is the same and is $(CH_2)_n$ or cis-CH=CH;

n is 2 or 3;

X is halo, nitrato or $PF_6$; and

M is Au(I), Ag(I) or Cu(I); provided that when M is Cu(I), R and R′ are the same and are phenyl, and A is $(CH_2)_2$, X is other than halo; and further provided that when R and R′ are the same and are monosubstituted phenyl, M is other than Cu(I); and further provided that when R and R′ are the same and are ethyl, A is $(CH_2)_2$ and M is Au(I), X is other than halo;

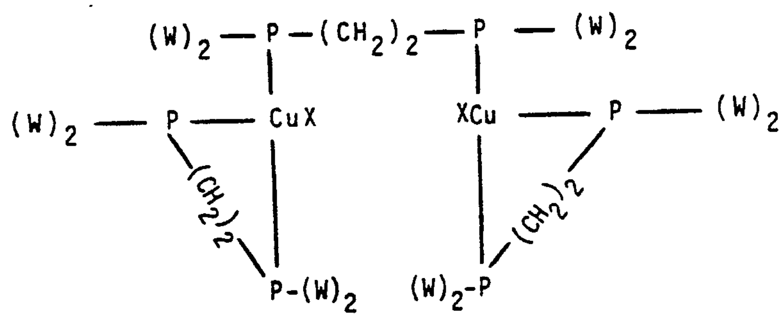

FORMULA (II)

wherein

W is the same and is phenyl; and

X is the same and is halo or nitrato;

for use in a method of therapy.

2. A compound according to claim 1 for use as a tumor cell growth-inhibiting agent.

3. A compound of the formula (IA)

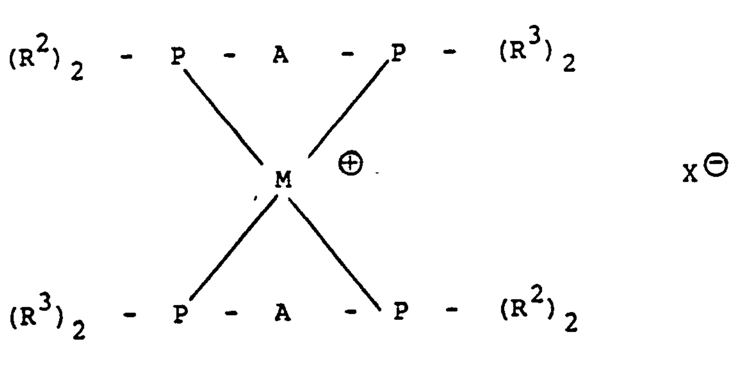

Formula (IA)

wherein

$R^2$ and $R^3$ are the same and are phenyl, ethyl or monosubstituted phenyl wherein said substituent is halo, or $R^2$ is ethyl when $R^3$ is phenyl;

A is the same and is $(CH_2)_n$ or cis-CH=CH;

n is 2 or 3;

X is halo, nitrato or $PF_6$; and

M is Au(I), Ag(I) or Cu(I); provided that when M is Cu(I), $R^2$ and $R^3$ are the same and are phenyl, and A is $(CH_2)_2$, X is other than halo or other than nitrato; and further provided that when $R^2$ and $R^3$ are the same and are monosubstituted phenyl, M is other than Cu(I); and further provided that when $R^2$ and $R^3$ are the same and are ethyl, A is $(CH_2)_2$ and M is Au(I), X is other than halo; and further provided that when $R^2$ and $R^3$ are the same and are phenyl, A is $(CH_2)_2$ and M is Au(I), X is other than chloro.

4. A compound according to either claim 1 or 2 wherein R and R′ are the same and are phenyl, or R′ is ethyl when R is phenyl, A is the same and is $(CH_2)_2$, $(CH_2)_3$ or cis-CH=CH, M is Au(I) or Ag(I) and X is chloro or nitrato.

5. A compound according to either claim 1 or 2 wherein R and R′ are the same and are phenyl, M is Au(I), A is $—(CH_2)_2—$, and X is chloro.

6. A compound of the formula (II) according to either claim 1 or 2 wherein x is the same and is chloro.

7. A pharmaceutical composition which comprises a compound of formula (I) or (II) as defined in claim 1 and a pharmaceutically acceptable carrier or diluent.

8. A composition according to claim 6 in which the composition is in dosage unit form adapted for parenteral administration.

9. A composition according to claim 7 in which the parenteral dosage unit is adapted to administer 5 mg to about 20 mg/m$^2$ or body surface.

**Claims for the Contracting State: AT**

1. A process for preparing a pharmaceutical composition which comprises admixing an inert pharmaceutically acceptable carrier or diluent with an effective tumor cell growth-inhibiting amount of an active ingredient, wherein said active ingredient is a compound of Formula (I) or Formula (II):

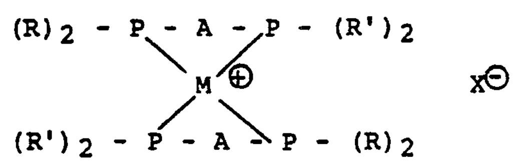

FORMULA (I)

wherein

R and R′ are the same and are phenyl, ethyl or monosubstituted phenyl wherein said substituent is halo, or R′ is ethyl when R is phenyl;

A is the same and is $(CH_2)_n$ or cis-CH=CH;

n is 2 or 3;

X is halo, nitrato or $PF_6$; and

M is Au(I), Ag(I) or Cu(I); provided that when M is Cu(I), R and R′ are the same and are phenyl, and A is $(CH_2)_2$, X is other than halo; and further provided that when R and R′ are the same and are monosubstituted phenyl, M is other than Cu(I); and further provided that when R and R′ are the same and are ethyl, A is $(CH_2)_2$ and M is Au(I), X is other than halo;

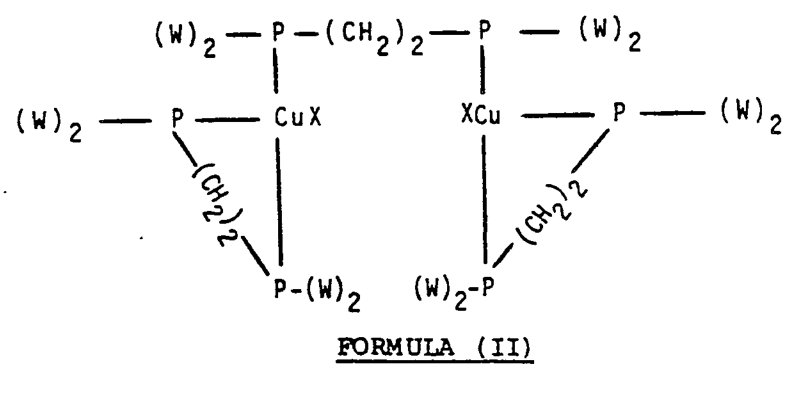

FORMULA (II)

wherein

W is the same and is phenyl; and

X is the same and is halo or nitrato.

2. The process of Claim 1 in which the composition is in dosage unit form adapted for parenteral administration.

3. The process of Claim 2 in which the parenteral dosage unit is adapted to administer 5 mg to about 20 $mg/m^2$ of body surface.

4. The process of Claim 1 wherein the active ingredient is a compound of Formula (I) and R and R′ are the same and are phenyl, or R′ is ethyl when R is phenyl, A is the same and is $(CH_2)_2$, $(CH_3)_3$ or cis-CH=CH, M is Au(I) or Ag(I) and X is chloro or nitrato.

5. The process of Claim 4 wherein R and R′ are the same and are phenyl, A is $(CH_2)_2$, M is Au(I), and X is chloro.

6. The process of Claim 1 wherein the active ingredient is a compound of Formula (II) and X is the same and is chloro.

**Patentansprüche für die Vertragsstaaten: BE CH DE FR GB IT LI LU NL SE**

1. Verbindung der Formel (I) oder (II):

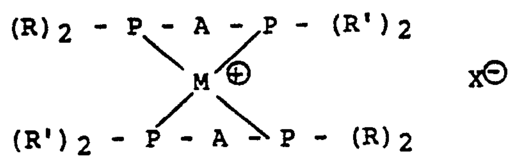

Formel (I)

in der

R und R′ gleich sind und eine Phenyl-, Äthyl- oder monosubstituierte Phenylgruppe bedeuten, wobei der Substituent ein Halogenatom ist, oder R′ ein Äthylgruppe bedeutet, wenn R eine Phenylgruppe bedeutet;

A gleich ist und $(CH_2)_n$ oder cis-CH=CH bedeutet;

n den Wert 2 oder 3 hat;

X ein Halgenoatom, Nitrat oder $PF_6$ bedeutet; und

M Au(I), Ag(I) oder Cu(I) bedeutet; mit der Maßgabe, daß X nicht Halogen bedeutet, wenn M Cu(I) bedeutet, R und R′ gleich sind und Phenylgruppen bedeuten und A $(CH_2)_2$ bedeutet; mit der weiteren Maßgabe, daß M nicht Cu(I) bedeutet, wenn R und R′ gleich sind und monosubstituierte Phenylgruppen bedeuten; und mit der weiteren Maßgabe, daß X nicht Halogen bedeutet, wenn R und R′ gleich sind und Äthylgruppen bedeuten, A $(CH_2)_2$ bedeutet, und M Au(I) bedeutet;

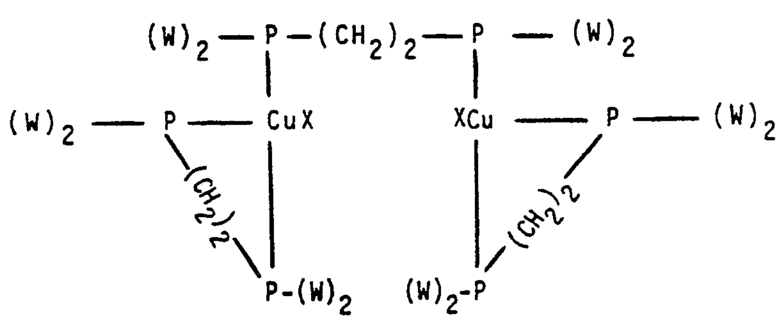

Formel (II)

in der

W gleich ist und eine Phenylgruppe bedeutet; und

X gleich ist und ein Halogenatom oder Nitrat bedeutet, zur Verwendung in einem therapeutischen Verfahren.

2. Verbindung nach Anspruch 1 zur Verwendung als Wirkstoff zur Inhibition des Wachstums von Tumorzellen.

3. Verbindung der Formel (IA),

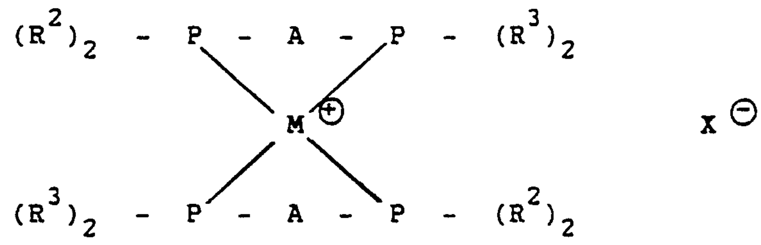

in der

$R_2$ und $R_3$ gleich sind und eine Phenyl-, Äthyl- oder monosubstituierte Phenylgruppe bedeuten, wobei der Substituent ein Halogenatom ist, oder $R_2$ ein Äthylgruppe bedeutet, wenn $R_3$ eine Phenylgruppe bedeutet;

A gleich ist und $(CH_2)_n$ oder cis-CH=CH bedeutet;

n den Wert 2 oder 3 hat;

X ein Halgenatom, Nitrat oder $PF_6$ bedeutet; und

M Au(I), Ag(I) oder Cu(I) bedeutet; mit der Maßgabe, daß X nicht Halogen oder Nitrat bedeutet, wenn M Cu(I) bedeutet, $R_2$ und $R_3$ gleich sind und Phenylgruppen bedeuten und A $(CH_2)_2$ bedeutet; mit der weiteren Maßgabe, daß M nicht Cu(I) bedeutet, wenn $R_2$ und $R_3$ gleich sind und monosubstituierte Phenylgruppen bedeuten; mit der weiteren Maßgabe, daß X nicht Halogen bedeutet, wenn $R_2$ und $R_3$ gleich sind und Äthylgruppen bedeuten, A $(CH_2)_2$ bedeutet, und M Au(I) bedeutet; und mit der weiteren Maßgabe, daß X nicht Chlor bedeutet, wenn $R_2$ und $R_3$ gleich sind und Phenylgruppen bedeuten, A $(CH_2)_2$ bedeutet und M Au(I) bedeutet.

4. Verbindung nach einem der Ansprüche 1 oder 2, in denen R und R′ gleich sind und Phenylgruppen bedeuten, oder R′ eine Äthylgruppe bedeutet, wenn R eine Phenylgruppe bedeutet, A gleich ist und $(CH_2)_2$, $(CH_2)_3$ oder cis-CH=CH bedeutet, M Au(I) oder Ag(I) bedeutet und X Chlor oder Nitrat bedeutet.

5. Verbindung nach einem der Ansprüche 1 oder 2, in denen R und R′ gleich sind und Phenylgruppen bedeuten, M Au(I) bedeutet, A —$(CH_2)_2$— bedeutet und X Choro bedeutet.

6. Verbindung der Formel (II) nach einem der Ansprüche 1 oder 2, in denen X gleich ist und Chlor bedeutet.

7. Arzneimittel, umfassend eine Verbindung der Formel (I) oder (II) nach Anspruch 1 und einem pharmazeutisch verträglichen Träger oder ein pharmazeutisch verträgliches Verdünnungsmittel.

8. Mittel nach Anspruch 7, in dem das Mittel in einer Einheitsdosierungsform zur parenteralen Applikation vorliegt.

9. Mittel nach Anspruch 7, in dem die parenterale Dosierungseinheit so bemessen ist, daß 5 mg bis etwa 20 mg/m² der Körperoberfläche appliziert werden.

**Patentansprüche für den Vertragsstaat: AT**

1. Verfahren zur Herstellung eines Arzneimittels, bei dem einen inerten pharmazeutisch verträglichen Träger oder ein pharmazeutisch verträgliches Verdünnungsmittel mit einer wirksamen Menge eines das Tumorzell-Wachstum inhibierenden Wirkstoffs vermengt, wobei der Wirkstoff eine Verbindung der Formel (I) oder (II) ist:

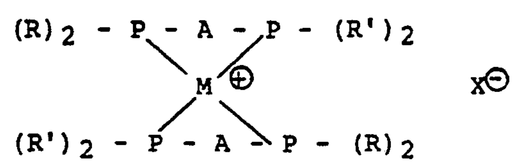

Formel (I)

in der

R und R′ gleich sind und eine Phenyl-, Äthyl- oder monosubstituierte Phenylgruppe bedeuten, wobei der Substituent ein Halogenatom ist, oder R′ ein Äthylgruppe bedeutet, wenn R eine Phenylgruppe bedeutet;

A gleich ist und $(CH_2)_n$ oder cis-CH=CH bedeutet;

n den Wert 2 oder 3 hat;

X ein Halogenatom, Nitrat oder $PF_6$ bedeutet; und

M Au(I), Ag(I) oder Cu(I) bedeutet; mit der Maßgabe, daß X nicht Halogen bedeutet, wenn M Cu(I) bedeutet, R und R′ gleich sind und Phenylgruppen bedeuten und A $(CH_2)_2$ bedeutet; mit der weiteren Maßgabe, daß M nicht Cu(I) bedeutet, wenn R und R′ gleich sind und monosubstituierte Phenylgruppen

bedeuten; und mit der weiteren Maßgabe, daß X nicht Halogen bedeutet, wenn R und R′ gleich sind und Äthylgruppen bedeuten, A $(CH_2)_2$ bedeutet, und M Au(I) bedeutet;

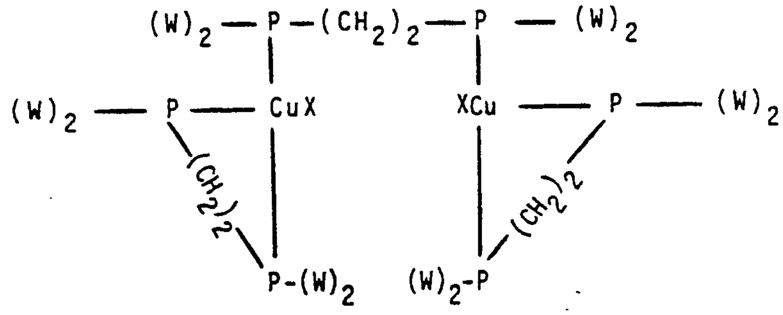

Formel (II)

in der

W gleich ist und eine Phenylgruppe bedeutet; und

X gleich ist und ein Halogenatom oder Nitrat bedeutet.

2. Verfahren nach Anspruch 1, in dem das Mittel zur parenteralen Applikation in einer Einheitsdosierungsform vorliegt.

3. Verfahren nach Anspruch 2, in dem die parenterale Dosierungseinheit so bemessen ist, daß 5 mg bis etwa 20 mg/m² der Körperoberfläche appliziert werden.

4. Verfahren nach Anspruch 1, in dem Wirkstoff eine Verbindung der Formel (I) ist und R und R′ gleich sind und Phenylgruppen bedeuten, oder R′ eine Äthylgruppe bedeutet, wenn R eine Phenylgruppe bedeutet, A gleich ist und $(CH_2)_2$, $(CH_2)_3$ oder cis-CH=CH bedeutet, M Au(I) oder Ag(I) bedeutet und X Chlor oder Nitrat bedeutet.

5. Verfahren nach Anspruch 4, in dem R und R′ gleich sind und Phenylgruppen bedeuten, A $(CH_2)_2$ bedeutet, M Au(I) bedeutet und X Choro bedeutet.

6. Verfahren nach Anspruch 1, in dem der Wirkstoff eine Verbindung der Formel (II) ist und X gleich ist und Chlor bedeutet.

**Revendications pour les Etats contractants: BE CH DE FR GB IT LI LU NL SE**

1. Composé de formule (I) ou (II):

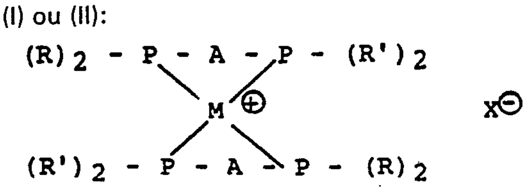

Formule (I)

où

R et R′ sont identiques et sont phényle, éthyle ou un phényle monosubstitué dans lequel le dit substituant est halo, ou R′ est éthyle lorsque R est phényle.

A est le même et est $(CH_2)_n$ ou cis-CH=CH;

n est 2 ou 3;

X est halo, nitrato ou $PF_6$; et

M est Au(I), Ag(I) ou Cu(I); à condition que, lorsque M est Cu(I). R est R′ sont identiques et sont phényle, et A est $(CH_2)_2$, X est différent de halo, et à condition également que, lorsque R et R′ sont identiques et sont un phényle monosubstitué, M est différent de CU(I); et à condition encore que, lorsque R est R′ sont identiques et sont éthyle, A est $(CH_2)_2$ et M est AU(I), X est différent de halo;

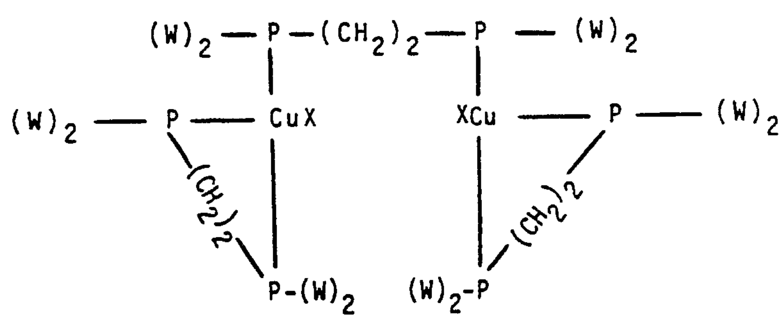

Formule (II)

où

W est le même et est phényle; et

X est le même et est halo ou nitrato

pour application dans une méthode de traitement.

2. Composé suivant la revendication 1 pour application comme agent d'inhibition de la croissance de cellules tumorales.

3. Composé de la formule (IA)

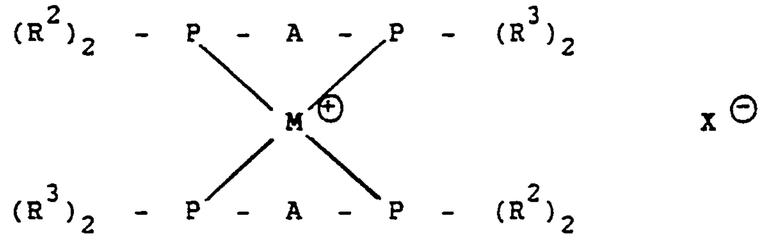

Formule (IA)

où

$R^2$ et $R^3$ sont identiques et sont phényle, éthyle ou un phényle monosubstitué dans lequel le dit substituant est halo, ou $R^2$ est éthyle lorsque $R^3$ est phényle;

A est le même et est $(CH_2)_n$ ou cis-CH=CH;

n est 2 ou 3;

X est halo, nitrato ou $PF_6$; et

M est Au(I), Ag(I) ou Cu(I); à condition que, lorsque M et Cu(I). $R^2$ est $R^3$ sont identiques et sont phényle, et A est $(CH_2)_2$, X est différent de halo ou différent de nitrato et à condition également que lorsque $R^2$ et $R^3$ sont identiques et son un phényle monosubstitué, M est différent de Cu(I) et à condition que, lorsque $R^2$ et $R^3$ sont identiques et sont éthyle, A est $(CH_2)_2$ et M est Au(I), X est différent de halo et à condition encore que lorsque $R^2$ et $R^3$ sont identiques et sont phényle, A est $(CH_2)_2$ et M est Au(I), X est différent de chloro.

4. Composé suivant l'une quelconque des revendications 1 et 2 où R est R' sont identiques et sont phényle ou R' est éthyle lorsque R est phényle, A est le même et est $(CH_2)_2$, $(CH_2)_3$ ou cis-CH=CH, M est Au(I) ou Ag(I) et X est chloro ou nitrato.

5. Composé suivant la revendication 1 ou 2 où R et R' sont identiques et sont phényle, M est Au(I), A est $-(CH_2)_2-$, et X est chloro.

6. Composé de la formule (II) suivant la revendication 1 ou 2 où X est le même et est chloro.

7. Composition pharmaceutique qui comprend un composé de formule (I) ou (II) tel que défini dans la revendication 1 et un excipient ou diluant pharmaceutiquement acceptable.

8. Composition suivant la revendication 6 dans laquelle le composition est sous forme de dose unitaire adaptée à l'administration parentérale.

9. Composition suivant la revendication 7 dans laquelle la dose unitaire parentérale est adaptée pour administrer de 5 mg à environ 20 $mg/m^2$ de surface corporelle.

**Revendications pour l'Etat contractant: AT**

1. Procédé pour préparer une composition pharmaceutique qui comprend le mélange d'un excipient ou diluant inerte pharmaceutiquement acceptable avec une quantité effective d'un ingrédient actif inhibant la croissance de cellules tumorales, dans lequel ledit ingrédient actif est un composé de Formule(I) ou de Formule (II):

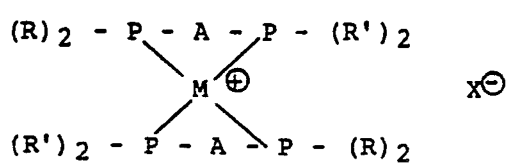

Formule (I)

où

R et R' sont identiques et sont phényle, éthyle ou un phényle monosubstitué dans lequel le dit substituant est halo, ou R' est éthyle lorsque R est phényle.

A est le même et est $(CH_2)_n$ ou cis-CH=CH;

n est 2 ou 3;

X est halo, nitrato ou $PF_6$; et

M est Au(I), Ag(I) ou Cu(I); à condition que, lorsque M est Cu(I). R est R' sont identiques et sont phényle et A est $(CH_2)_2$, X est différent de halo, et à condition également que lorsque R et R' sont identiques et sont

un phényle monosubstitué, M est différent de Cu(I); et à condition encore que, lorsque R est R' sont les mêmes et sont éthyle, A est $(CH_2)_2$ et M est Au(I), X est différent de halo.

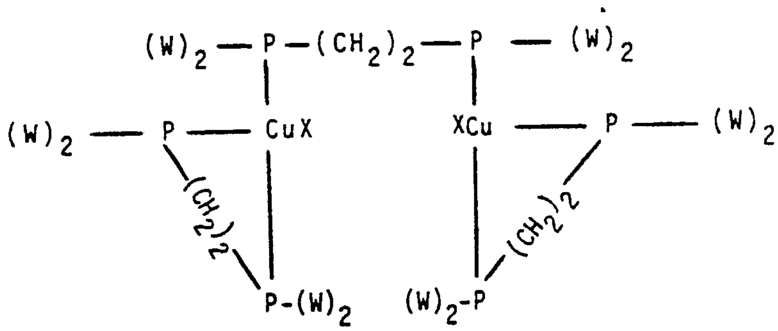

Formule (II)

où

W est le même et est phényle; et

X est le même et est halo ou nitrato.

2. Procédé de la revendication 1 dans lequel le composition est sous forme de dose unitaire adaptée à l'administration parentérale.

3. Procédé de la revendication 2 dans lequel la dose unitaire parentérale est adaptée pour administrer de 5 mg à environ 20 $mg/m^2$ de surface corporelle.

4. Procédé de la revendication 1 dans lequel l'ingrédient actif est un composé de Formule (I) et R et R' sont identiques et sont phényle ou R' est éthyle lorsque R est phényle, A est le même et est $(CH_2)_2$, $(CH_3)_3$ ou cis-CH=CH, M est Au(I) ou Ag(I) et X est chloro ou nitrato.

5. Procédé de la revendication 3 où R et R' sont identiques et sont phényle, A est $(CH_2)_2$, M est Au(I), et X est chloro.

6. Procédé de la revendication 1 dans lequel l'ingrédient actif est un composé de Formule (II) et X est le même et est chloro.